# EUROPEAN PATENT APPLICATION

(11) **EP 4 742 107 A1**
(43) Date of publication of application: **13.05.2026**
(21) Application number: 23944305.4
(22) Date of filing: 04.07.2023
(51) Int. Cl.: G06N 10/00, G01R 15/24

(54) **QUANTUM CONVERTER AND QUANTUM CONVERSION METHOD**

(71) Applicant: FUJITSU LIMITED, Kawasaki-shi, Kanagawa 211-8588 (JP)
(72) Inventor: SEKINE, Akihiko, Kawasaki-shi, Kanagawa 211-8588 (JP)
(74) Representative: Haseltine Lake Kempner LLP
(86) International application number: PCT/JP2023/024748
(87) International publication number: WO 2025/009053

(57) **Abstract**

A quantum frequency converter includes a lamina te including at least one topological insulator film and at least one ferromagnetic film that are lamina ted together, and the laminate includes an interface between the topological insulator film and the ferr omagnetic film. The quantum frequency converter incl udes a magnetic field applying unit configured to ap ply a magnetic field with a component perpendicular to the interface to the laminate, and a microwave tr ansceiver configured to transmit and receive a micro wave to and from the laminate. The interface of the laminate is irradiated with laser light. The quantum frequency converter can be used, for example, in a quantum computer.

## Description

### TECHNICAL FIELD

The present disclosure relates to a quantum frequency converter and a quantum frequency conversion method.

### BACKGROUND

In quantum computers, quantum frequency conversion between microwave photons and optical photons is performed in some cases. Quantum frequency converters for quantum frequency conversion have been proposed.

### RELATED-ART DOCUMENTS

### PATENT DOCUMENTS

Patent Document 1: Japanese National Publication of International Patent Application No. 2013-500530
Patent Document 2: Japanese National Publication of International Patent Application No. 2019-512104,
Patent Document 3: U.S. Patent Application Publication No. 2022/0215281,

### Non-PATENT DOCUMENTS

Non-Patent Document 1: R. Hisatomi et al., Phys. Rev. B 93, 174427 (2016)
Non-Patent Document 2: Tse & MacDonald, Phys. Rev. Lett. 105 057401 (2010)
Non-Patent Document 3: J. Maciejko et al., Phys. Rev. Lett. 105 166803 (2010)

### SUMMARY

### PROBLEM TO BE SOLVED BY THE INVENTION

Conventional quantum frequency converters have low conversion efficiency in quantum frequency conversion.

An object of the present disclosure is to provide a quantum frequency converter and a quantum frequency conversion method capable of improving conversion efficiency.

### MEANS FOR SOLVING THE PROBLEM

According to one aspect of the embodiments, a quantum frequency converter includes a laminate including at least one topological insulator film and at least one ferromagnetic film that are laminated together, and including an interface between the topological insulator film and the ferromagnetic film; a magnetic field applying unit configured to apply a magnetic field with a component perpendicular to the interface to the laminate; and a microwave transceiver configured to transmit and receive a microwave to and from the laminate. The interface of the laminate is irradiated with laser ligh.

### EFFECTS OF THE INVENTION

In the present disclosure, conversion efficiency can be improved.

### BRIEF DESCRIPTION OF DRAWINGS

[FIG. 1] FIG. 1 is a schematic diagram illustrating a quantum frequency converter in a first reference example;
[FIG. 2] FIG. 2 is a schematic diagram illustrating the quantum frequency converter in a second reference example;
[FIG. 3] FIG. 3 is a schematic diagram illustrating the quantum frequency converter according to a first embodiment;
[FIG. 4] FIG. 4 is a schematic diagram illustrating the quantum frequency converter according to a second embodiment;
[FIG. 5] FIG. 5 is a diagram illustrating the relationship between a thickness of a ferromagnetic film, the number of topological insulator films, and a ratio for conversion efficiency;
[FIG. 6] FIG. 6 is a schematic diagram illustrating the quantum frequency converter according to a third embodiment; and
[FIG. 7] FIG. 7 is a schematic diagram illustrating the quantum frequency converter according to a fourth embodiment.

### MODE FOR CARRYING OUT THE INVENTION

Hereinafter, embodiments of the present disclosure will be described with reference to the accompanying drawings. In the specification and the drawings, components having substantially the same functional configuration are denoted by the same reference numerals, and redundant description may be omitted.

### (Reference Examples)

First, a first reference example will be described.

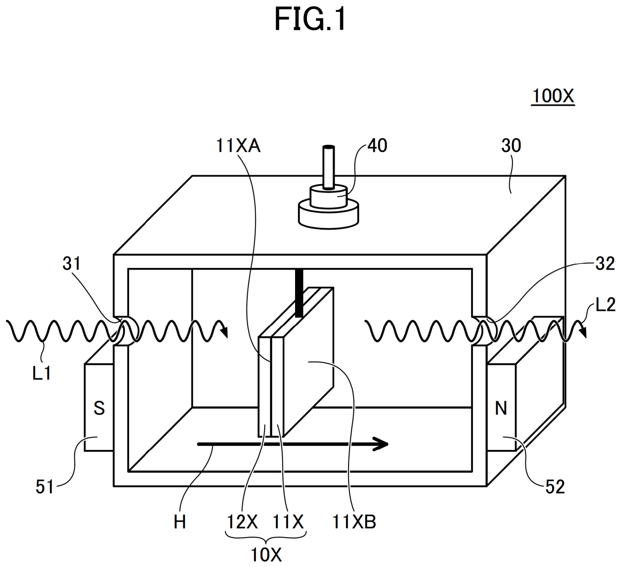

FIG. 1 is a schematic diagram illustrating a quantum frequency converter in the first reference example.

As illustrated in FIG. 1, a quantum frequency converter 100X in the first reference example has a microwave resonator 30, a laminate 10X, an S pole 51, an N pole 52, and an antenna 40.

The laminate 10X has a ferromagnetic topological insulator film 11X and a first film 12X. The ferromagnetic topological insulator film 11X has a first surface 11XA and a second surface 11XB opposite to the first surface 11XA. The first film 12X is in contact with the first surface 11XA. The first film 12X is composed of, for example, a nonmagnetic insulator. The first film 12X is a substrate including, for example, SrTiO₃, InP, Al₂O₃, or any combination thereof. The ferromagnetic topological insulator film 11X includes a topological insulator and a ferromagnet with which the topological insulator is doped. For example, the topological insulator includes Bi, Sb, and Te, and the ferromagnet includes Cr or V, or both of Cr and V. The composition of the ferromagnetic topological insulator film 11X is, for example, Crₓ (Bi_{1-y}Sb_{y})₂₋ₓTe₃ or Vₓ(Bi_{1-y}Sb_{y})₂₋ₓTe_{3.} For example, the value of x is greater than or equal to 0.1 and less than or equal to 0.6, and the value of y is greater than or equal to 0.7 and less than or equal to 0.9. The thickness of the ferromagnetic topological insulator film 11X is, for example, greater than or equal to 5 nm and less than or equal to 100 µm. The ferromagnetic topological insulator film 11X has a square planar shape having a side length of about 1 mm in a plan view in a direction perpendicular to the first surface 11XA. The planar shape of the ferromagnetic topological insulator film 11X is not limited to the square shape, and may be circular or the like.

The S pole 51 and the N pole 52 are provided on the outer wall surface of the microwave resonator 30. The S pole 51 faces the first surface 11XA, and the N pole 52 faces the second surface 11XB. A magnetic field H directed from the S pole 51 to the N pole 52 is generated between the S pole 51 and the N pole 52. The S pole 51 and the N pole 52, as a magnetic field applying unit, apply the magnetic field H with a component perpendicular to the first surface 11XA to the ferromagnetic topological insulator film 11X.

The antenna 40 is provided on the outer wall surface of the microwave resonator 30. The antenna 40, which is used as a microwave transceiver, transmits and receives microwaves to and from the ferromagnetic topological insulator film 11X.

The microwave resonator 30 is provided with an inlet 31 and an outlet 32. The inlet 31 faces the first surface 11XA, and the outlet 32 faces the second surface 11XB. An optical fiber is connected to the inlet 31, and the ferromagnetic topological insulator film 11X is irradiated with laser light L1 from the outside through the outlet 31. The first surface 11XA of the ferromagnetic topological insulator film 11X is irradiated with the laser light L1. An optical fiber is connected to the outlet 32, and laser light L2 that is transmitted through the ferromagnetic topological insulator film 11X is emitted through the outlet 32. The laser light L1 is linearly polarized laser light.

The deflection or the like of the laser light L2 that is emitted to the outside through the outlet 32 is detected. In this arrangement, microwave photons of microwaves with which that the ferromagnetic topological insulator film 11X is irradiated through the antenna 40 are quantum-converted into optical photons.

Hereinafter, characteristics of the ferromagnetic topological insulator film 11X will be described.

In general, photon conversion efficiency η in the ferromagnet using the Faraday effect is approximately given by "Aφ_{F}²/N_{S}." Here, "A" is a coefficient determined by the intensity of the laser light or the like, "φ_{F}" is a Faraday rotation angle, and "Ns" is a total number of spins in the ferromagnet. A value of A is, for example, about 10¹⁰.

In general, the Faraday rotation angle φ_{F} in the ferromagnetic topological insulator film is given by "tan⁻¹α (rad)." Here, α is a fine structure constant, and a value of "tan⁻¹α (rad)," that is, the Faraday rotation angle φ_{F} is about 1/137 rad.

The total number of spins N_{S} in the ferromagnetic topological insulator film 11X is given by "n_{S} × V," when spin density per unit volume of the ferromagnetic topological insulator film 11X is represented by n_{S} (mm⁻³), and the volume of the ferromagnetic topological insulator film 11X is represented by V (mm³). When the spin density per unit volume of the ferromagnet in the ferromagnetic topological insulator film 11X is represented by n_{S0} (mm⁻³), and the atomic fraction of the ferromagnet in the ferromagnetic topological insulator film 11X is represented by γ_{S} the spin density per unit volume of the ferromagnetic topological insulator film 11X, n_{S}, is given by "γ_{S} × n_{S0} (mm⁻³)."

For example, the spin density of the ferromagnetic topological insulator film 11X, n_{S}, is determined below for a composition of Cr_{0.15}(Bi_{0.1}Sb_{0.9})_{1.85}Te₃ (x = 0.15 and y = 0.9). In a case of (Bi_{0.1}Sb_{0.9})₂Te₃, 40 at% is Bi or Sb. In a case of Cr_{0.15}(Bi_{0.1}Sb_{0.9})_{1.85}Te₃, 15 at% of Bi or Sb in (Bi_{0.1}Sb_{0.9})₂Te₃ is substituted with Cr. Thus, the atomic fraction of Cr in Cr_{0.15}(Bi_{0.1}Sb_{0.9})_{1.85}Te₃ is 6 at%. In this case, when the spin density per unit volume of Cr is represented by ns_{0,Cr}, the spin density of the ferromagnetic topological insulator film 11X, n_{S}, for the composition of Cr_{0.15}(Bi_{0.1}Sb_{0.9})_{1.85}Te₃ is given by "0.06 x n_{S0,Cr} (mm⁻³)." From the above, for the composition of Cr_{0.15}(Bi_{0.1}Sb_{0.9})_{1.85}Te₃, conversion efficiency η_{TIX} of the ferromagnetic topological insulator film 11X is given by "A(1/137)²/(0.06 x n_{S0,Cr} x V)." Assuming that the spin density n_{S0,Cr} is the same as the spin density of yttrium-iron-garnet (YIG), the spin density n_{S0,Cr} is given by 2.1 × 10¹⁹ mm⁻³. In this case, when a thickness d of the ferromagnetic topological insulator film 11X is 30 nm, and an area S of the first surface 11XA is 1 mm², the conversion efficiency η_{TIX} of the ferromagnetic topological insulator film 11X is about 1.4 × 10⁻⁸.

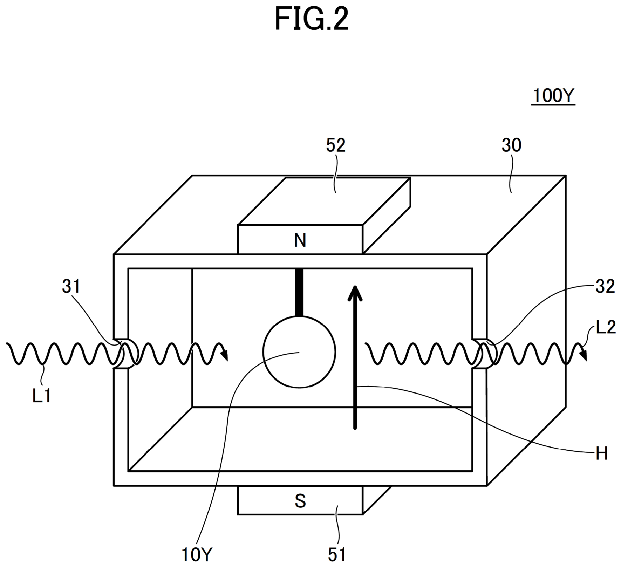

Next, a second reference example will be described for comparison with the first reference example. The second reference example differs from the first reference example mainly in the ferromagnet configuration and magnetic pole arrangement. FIG. 2 is a schematic diagram illustrating the quantum frequency converter in the second reference example.

As illustrated in FIG. 2, a quantum frequency converter 100Y in the second reference example has a ferromagnetic sphere 10Y, instead of the laminate 10X. The sphere 10Y is made of YIG, and the diameter of the sphere 10Y is 0.75 mm. The S pole 51 and the N pole 52 are arranged so that a magnetic field H is formed in a direction perpendicular to a propagation direction of the laser light L1. Other configurations are the same as those of the first reference example.

A Faraday rotation angle φ_{F} of the sphere 10Y is given by "γ × d (rad)", where the Verdet constant is represented by γ (rad/mm), and the diameter is represented by d (mm). The Verdet constant of YIG is 0.38 (rad/mm).

A total number of spins N_{S} in the sphere 10Y is given by "nS × V," where the spin density per unit volume of the sphere 10Y is represented by n_{S} (mm⁻³), and the volume of the sphere 10Y is represented by V (mm³). The entire sphere 10Y is composed of YIG, which is a ferromagnet, and the spin density n_{S} is equal to the spin density per unit volume of YIG, n_{S0} (mm⁻³). From the above, when the spin density per unit volume of YIG, n_{S0}, is represented by n_{S0,YIG}, conversion efficiency η_{YIG} of the sphere 10Y composed of YIG is given by "A(0.38 x 0.75)²/(n_{S0,YIG} × V)." Since the spin density n_{S0,YIG} is given by 2.1 × 10¹⁹ mm⁻³, the conversion efficiency η_{YIG} of the sphere 10Y is about 3.0 × 10⁻¹⁰ when the volume V is 0.2209 mm³ (0.75 mm in diameter).

In this arrangement, the conversion efficiency η_{TIX} of the ferromagnetic topological insulator film 11X in the first reference example is about 10² times larger than the conversion efficiency η_{YIG} of the sphere 10Y in the second reference example.

However, the Curie point of the ferromagnetic topological insulator is about 1 K to 10 K, and an operating temperature in the first reference example is also about 1 K to 10 K. In view of the above situation, the inventor of this application has conducted extensive studies to improve the conversion efficiency η also at even higher temperatures. As a result, the inventor has arrived at the following embodiments.

### (First Embodiment)

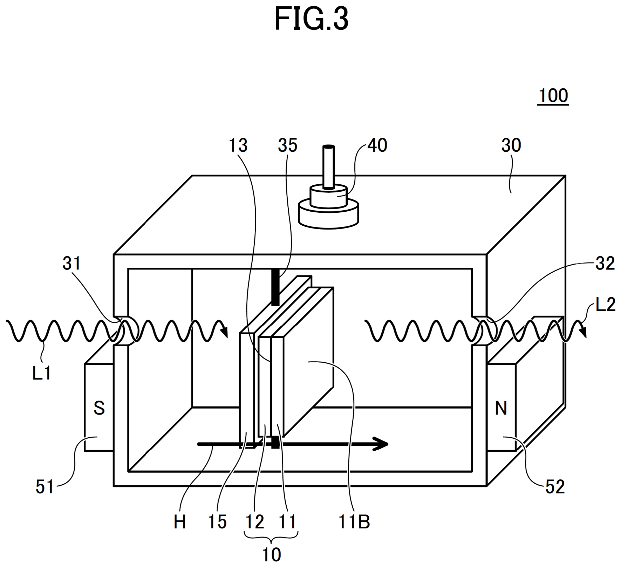

Next, a first embodiment will be described. The first embodiment relates to the quantum frequency converter. FIG. 3 is a schematic diagram illustrating the quantum frequency converter according to the first embodiment.

As illustrated in FIG. 3, a quantum frequency converter 100 according to the first embodiment has a microwave resonator 30, an S pole 51, an N pole 52, and an antenna 40, as in the first reference example. The quantum frequency converter 100 has a laminate 10, instead of the laminate 10X in the first reference example. Further, the quantum frequency converter 100 has a substrate 15.

The laminate 10 includes a topological insulator film 11 and a ferromagnetic film 12 that are laminated together. The topological insulator film 11 and the ferromagnetic film 12 are in contact with each other, and the laminate 10 has an interface 13 between the topological insulator film 11 and the ferromagnetic film 12.

The topological insulator film 11 includes a topological insulator. For example, the topological insulator film 11 is a film of Bi₂Se₃ or (BᵢₓSb₁₋ₓ)₂Te₃. For example, a value of x is greater than or equal to 0.7 and less than or equal to 0.9. The thickness of the topological insulator film 11 is, for example, greater than or equal to 5 nm and less than or equal to 100 µm. The topological insulator film 11 is not doped with a ferromagnet, and the topological insulator film 11 is a nonmagnetic film.

The ferromagnetic film 12 is, for example, a ferromagnetic insulator film. The Curie point of the ferromagnetic film 12 is, for example, 100 K or higher, preferably 200 K or higher, more preferably 300 K or higher, and still more preferably 400 K or higher. For example, the ferromagnetic film 12 is a film of Y₃Fe₅O₁₂(YIG), Tm₃Fe₅O₁₂(TIG), EuS, Cr₂Ge₂Te₆, or BaFe₁₂O₁₉. The thickness of the ferromagnetic film 12 is, for example, greater than or equal to 1 nm and less than or equal to 30 nm.

The substrate 15 is, for example, a nonmagnetic substrate. The substrate 15 includes, for example, Si, SrTiO₃, InP, Al₂O₃, or any combination thereof. The substrate 15 may include a Si substrate, a SrTiO₃ substrate, an InP substrate, or an Al₂O₃ substrate. The substrate 15 is fixed to the inside of the microwave resonator 30 by a support member 35.

The laminate 10 is provided on the substrate 15. For example, the ferromagnetic film 12 is in contact with the substrate 15. The topological insulator film 11 and the ferromagnetic film 12 have a square planar shape with a side length of about 0.5 mm in a plan view in a direction parallel to a lamination direction. The planar shape of each of the topological insulator film 11 and the ferromagnetic film 12 is not limited to a square shape, and may be a circular shape or the like.

As in the first reference example, the S pole 51 and the N pole 52 are provided on the outer wall surface of the microwave resonator 30. The S pole 51 faces the substrate 15, and the N pole 52 faces the topological insulator film 11. A magnetic field H directed from the S pole 51 toward the N pole 52 is generated between the S pole 51 and the N pole 52. The S pole 51 and the N pole 52, as a magnetic field applying unit, apply the magnetic field H with a component perpendicular to the interface 13, to the laminate 10.

As in the first reference example, the antenna 40 is provided on the outer wall surface of the microwave resonator 30. The antenna 40, as a microwave transceiver, transmits and receives microwaves to and from the laminate 10.

As in the first reference example, the microwave resonator 30 is provided with an inlet 31 and an outlet 32. The inlet 31 faces the substrate 15, and the outlet 32 faces the topological insulator film 11. An optical fiber is connected to the inlet 31, and laser light L1 is irradiated from the outside toward the laminate 10 through the inlet 31. The interface 13 is irradiated with the laser light L1 through the substrate 15 and the ferromagnetic film 12. An optical fiber is connected to the outlet 32, and the laser light L2 that is transmitted through the laminate 10 is emitted through the outlet 32. The laser light L1 is linearly polarized laser light. The ferromagnetic film 12 is composed of a material through which the laser light L1 can pass.

The deflection or the like of the laser light L2 that is emitted through the outlet 32 is detected. In this arrangement, microwave photons from the microwaves that are irradiated onto the laminate 10 through the antenna 40 are quantum-converted into optical photons.

Hereinafter, characteristics of the laminate 10 will be described.

As described above, the conversion efficiency η of photons by the ferromagnet using the Faraday effect is approximately given by "Aφ_{F}²/N_{S}." In general, the Faraday rotation angle φ_{F} of the laminate of the topological insulator film and the ferromagnetic film is given by "tan⁻¹α (rad)", and the Faraday rotation angle φ_{F} is about 1/137 rad.

A total number of spins N_{S} in the laminate 10 is given by "n_{S} × V," when spin density per unit volume of the ferromagnetic film 12 is represented by n_{S} (mm⁻³), and the volume of the ferromagnetic film 12 is represented by V (mm³).

The conversion efficiency η_{TI} of the laminate 10 when the entire ferromagnetic film 12 is composed of YIG is given by "A(1/137)²/(n_{S0,YIG} × V)." Since the spin density n_{S0,YIG} is 2.1 × 10¹⁹ mm⁻³, the conversion efficiency η_{TI} of the laminate 10 is about 1.0 × 10⁻⁷ when the thickness d of the ferromagnetic film 12 is 1 nm, and the area S of the interface 13 is 0.25 mm².

In this arrangement, the conversion efficiency η_{TI} of the laminate 10 in the first embodiment is about 3 × 10² times larger than the conversion efficiency η_{YIG} of the sphere 10Y in the second reference example.

In the laminate 10, exchange interaction occurs between electrons on the surface of the topological insulator film 11 and the ferromagnet in the ferromagnetic film 12, even at a temperature higher than 10 K. Thus, unlike the ferromagnetic topological insulator film 11X in the first reference example, the Faraday effect can be obtained even at a temperature higher than 10 K, for example, at a temperature of about 100 K, and the conversion efficiency η can be improved.

When the thickness d of the topological insulator film 11 is less than 5 nm, the topological insulator film 11 behaves as a two-dimensional material, and the Faraday effect may be difficult to obtain. When the thickness d is 5 nm or greater, the topological insulator film 11 can be easily formed stably. The topological insulator film 11 can be formed by, for example, molecular beam epitaxy (MBE) or the like.

When the thickness of the ferromagnetic film 12 is less than 1 nm, ferromagnetic resonance may not occur. When the thickness is 1 nm or greater, the ferromagnetic film 12 can be easily formed stably. The ferromagnetic film 12 can be formed by, for example, pulsed laser deposition or the like.

### (Second Embodiment)

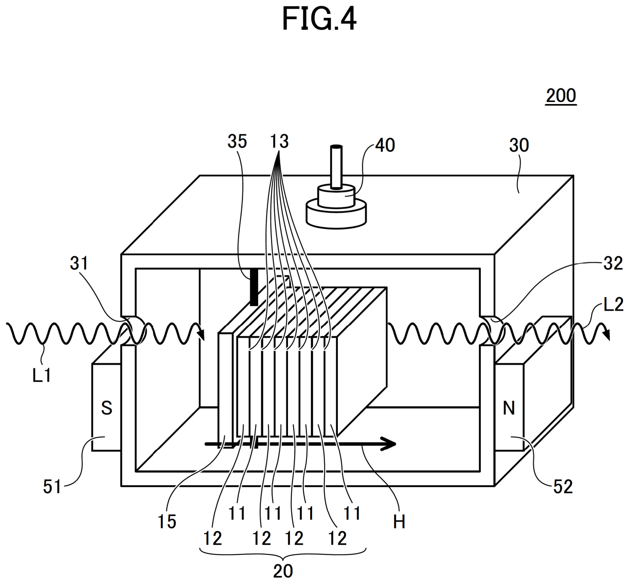

A second embodiment will be described below. The second embodiment differs from the first embodiment mainly in the laminate structure. FIG. 4 is a schematic diagram illustrating the quantum frequency converter according to the second embodiment.

As illustrated in FIG. 4, a quantum frequency converter 200 according to the second embodiment has a laminate 20, instead of the laminate 10.

The laminate 20 includes a plurality of topological insulator films 11 and a plurality of ferromagnetic films 12 that are laminated together. The topological insulator films 11 and the ferromagnetic films 12 are alternately laminated. The laminate 10 includes a plurality of interfaces 13.

Other configurations of the second embodiment are the same as those of the first embodiment.

In the second embodiment, as in the first embodiment, high conversion efficiency can be obtained. Further, in the second embodiment, the laminate 10 includes the plurality of topological insulator films 11 and the plurality of interfaces 13, and as a result, higher conversion efficiency η_{TI} can be obtained. For example, when the number of topological insulator films 11 is 30, the conversion efficiency η_{TI} of the laminate 20 in the second embodiment is about 10⁴ times larger than the conversion efficiency η_{YIG} of the sphere 10Y in the second reference example.

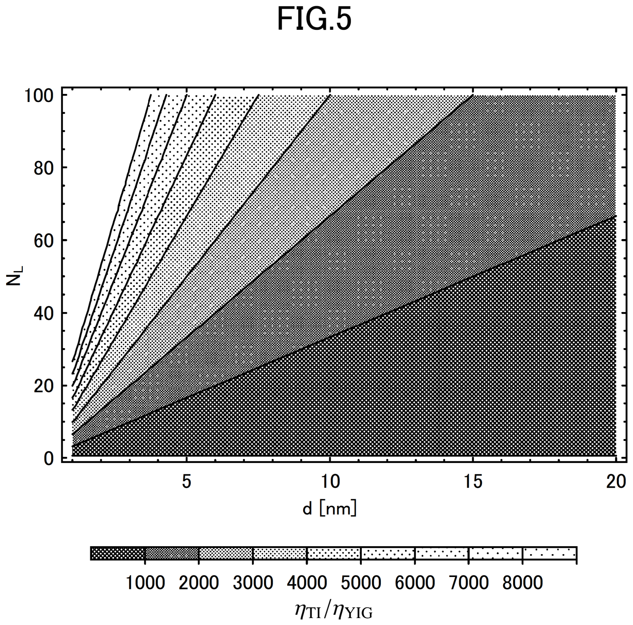

Next, the relationship between the thickness d of the ferromagnetic film 12, the number N_{L} of topological insulator films 11, and a ratio (η_{TI}/η_{YIG}) for conversion efficiency will be described. FIG. 5 is a diagram illustrating the relationship between the thickness d of the ferromagnetic film 12, the number _{NL} of topological insulator films 11, and the ratio (η_{TI}/η_{YIG}) for conversion efficiency. As illustrated in FIG. 5, for a constant number N_{L} of topological insulator films 11, as the thickness d of the topological insulator film 11 decreases, the ratio (η_{TI}/η_{YIG}) for conversion efficiency increases. For a constant thickness d of the topological insulator film 11, as the number N_{L} of topological insulator films 11 increases, the ratio (η_{TI}/η_{YIG}) for conversion efficiency increases. The thickness of the ferromagnetic film 12 is preferably greater than or equal to 1 nm and less than or equal to 20 nm.

### (Third Embodiment)

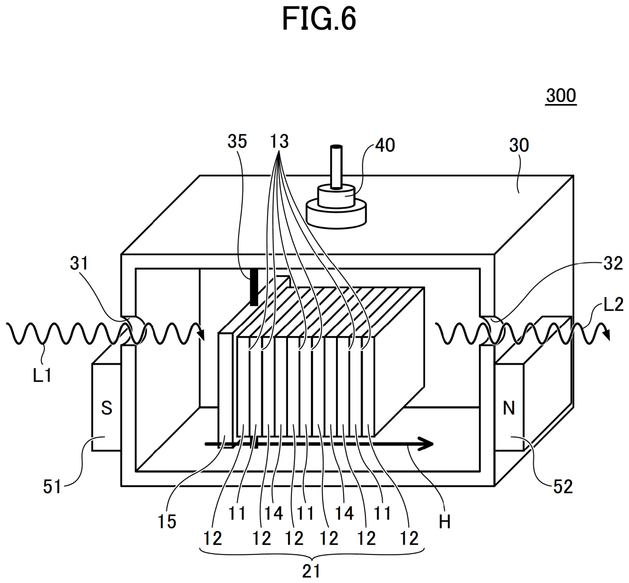

A third embodiment will be described below. The third embodiment differs from the second embodiment mainly in the laminate structure. FIG. 6 is a schematic diagram illustrating the quantum frequency converter according to the third embodiment.

As illustrated in FIG. 6, a quantum frequency converter 300 according to the third embodiment has a laminate 21, instead of the laminate 20.

The laminate 21 includes a plurality of topological insulator films 11, a plurality of ferromagnetic films 12, and a plurality of nonmagnetic spacers 14 that are laminated together. The topological insulator films 11 and the spacers 14 are alternately laminated, and the ferromagnetic films 12 are each arranged between the topological insulator film 11 and the spacer 14. The spacer 14 includes, for example, Si, SrTiO₃, InP, Al₂O₃, or any combination thereof. The spacer 14 may include a Si film, a SrTiO₃ film, an InP film, or an Al₂O₃ film.

A distance between two topological insulator films 11 that are adjacent in a lamination direction is, for example, 5 nm or greater. The thickness of the spacer 14 is, for example, 3 nm or greater. When the thickness of the spacer 14 is 3 nm or greater, and the thickness of the ferromagnetic film 12 is 1 nm or greater, the distance between the two topological insulator films 11 adjacent in the lamination direction is 5 nm or greater. When the distance between the two topological insulator films 11 adjacent in the lamination direction is less than 5 nm, there is a possibility that hybridization of surface states occurs between the two topological insulator films 11. When the distance between two adjacent topological insulator films 11 in the lamination direction is 5 nm or greater, the hybridization can be suppressed.

### (Fourth Embodiment)

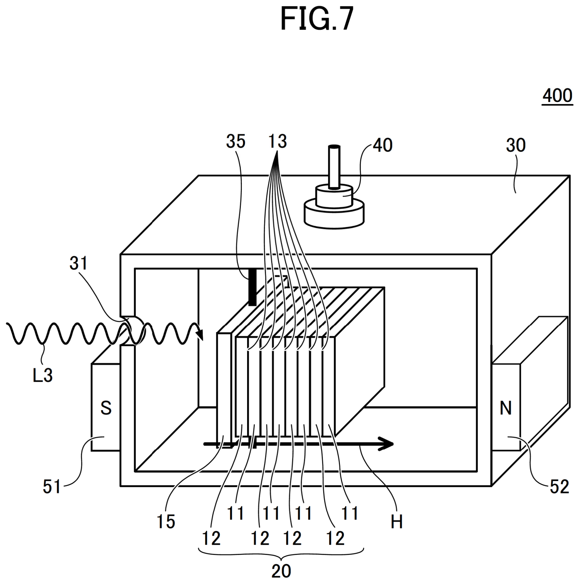

A fourth embodiment will be described below. The fourth embodiment differs from the second embodiment mainly in the deflection of the laser light irradiated on the laminate. FIG. 7 is a schematic diagram illustrating the quantum frequency converter according to the fourth embodiment.

As illustrated in FIG. 7, in a quantum frequency converter 400 according to the fourth embodiment, laser light L3 is irradiated from the outside toward the laminate 20 through the inlet 31. The laser light L3 is a combination of two types of laser light with orthogonal deflection angles. The laser light L3 is irradiated on a first surface of the laminate 20. The outlet 32 may not be provided.

In the fourth embodiment, a microwave in accordance with the deflection of the laser light L3 is emitted from the laminate 20, and output to the outside through the antenna 40. In this arrangement, optical photons of the laser light L3 irradiated on the laminate 10 are quantum-converted into microwave photons.

In the fourth embodiment, as in the second embodiment, high conversion efficiency can be obtained.

In the fourth embodiment, the laminate 10 or 21 may be used, instead of the laminate 20.

The quantum frequency converter according to the present disclosure can be used, for example, for communication between superconducting qubits that are housed in each of a plurality of refrigerators. The use of the quantum frequency converter according to the present disclosure is not limited to communication between superconducting qubits. The quantum frequency converter can be used for quantum computing.

Although the embodiments and the like have been described above in detail, the present disclosure is not limited the embodiments and the the like. Various modifications and substitutions can be made to the embodiments and the like without departing from the scope set forth in the claims.

### REFERENCE SIGNS LIST

- 10, 20, 21:: laminate
- 11: topological insulator film
- 12:: ferromagnetic film
- 13:: interface
- 14:: spacer
- 15:: substrate
- 30:: microwave Resonator
- 31:: inlet
- 32:: outlet
- 40:: antenna
- 51:: S pole
- 52:: N pole
- 100, 200, 300, 400:: quantum frequency converter

## Claims

1. A quantum frequency converter comprising:
a laminate including:
at least one topological insulator film and at least one ferromagnetic film that are laminated together, and
an interface between the topological insulator film and the ferromagnetic film;
a magnetic field applying unit configured to apply a magnetic field with a component perpendicular to the interface to the laminate; and
a microwave transceiver configured to transmit and receive a microwave to and from the laminate,
wherein the interface of the laminate is irradiated with laser light.

2. The quantum frequency converter according to claim 1, further comprising:
a microwave resonator,
wherein the laminate is provided in the microwave resonator.

3. The quantum frequency converter according to claim 2, wherein the microwave resonator includes an inlet through which the laser light is to be emitted from outside.

4. The quantum frequency converter according to claim 3, wherein the microwave resonator includes an outlet through which the laser light, having passed through the laminate, is to be externally emitted.

5. The quantum frequency converter according to any one of claims 1 to 4, wherein the ferromagnetic film is a ferromagnetic insulator film.

6. The quantum frequency converter according to claim 5, wherein the ferromagnetic insulator film includes Y₃Fe₅O₁₂, Tm₃Fe₅O₁₂, EuS, Cr₂Ge₂Te₆, or BaFe₁₂O₁₉.

7. The quantum frequency converter according to any one of claims 1 to 4, wherein the topological insulator film includes Bi₂Se₃ or (BiₓSb₁₋ₓ)₂Te₃.

8. The quantum frequency converter according to any one of claims 1 to 4, wherein a thickness of the topological insulator film is greater than or equal to 5 nm and less than or equal to 100 µm.

9. The quantum frequency converter according to any one of claims 1 to 4, wherein a thickness of the ferromagnetic film is greater than or equal to 1 nm and less than or equal to 30 nm.

10. The quantum frequency converter according to any one of claims 1 to 4, wherein in the laminate, the at least one topological insulator film includes a plurality of topological insulator films, and the at least one ferromagnetic film includes a plurality of ferromagnetic films.

11. The quantum frequency converter according to any one of claims 1 to 4, wherein the at least one topological insulator film includes a plurality of topological insulator films, and
wherein the laminate includes a nonmagnetic spacer between two adjacent topological insulator films in a lamination direction, among the plurality of topological insulator films.

12. The quantum frequency converter according to claim 10, wherein a distance between two adjacent topological insulator films in a lamination direction, among the plurality of topological insulator films, is 5 nm or greater.

13. A quantum frequency conversion method executed by a quantum frequency converter including
a laminate including:
at least one topological insulator film and at least one ferromagnetic film that are laminated together, and
an interface between the topological insulator film and the ferromagnetic film,
a magnetic field applying unit configured to apply a magnetic field with a component perpendicular to the interface to the laminate, and
a microwave transceiver configured to transmit and receive a microwave to and from the laminate, the quantum frequency conversion method comprising:
irradiating the interface of the laminate with laser light.
